(19) Europäisches Patentamt
European Patent Office
Office européen des brevets

(11) **EP 2 466 187 A1**

(12) **EUROPEAN PATENT APPLICATION**

(43) Date of publication:
**20.06.2012 Bulletin 2012/25**

(51) Int Cl.:
**F17C 5/02** $^{(2006.01)}$

(21) Application number: **10195503.7**

(22) Date of filing: **16.12.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **AIR PRODUCTS AND CHEMICALS, INC.**<br>**Allentown, PA 18195-1501 (US)** | (72) Inventors:<br>• **Downie, Neil Alexander**<br>  **Odiham, RG29 1JN (GB)**<br>• **Mercer, Christopher John**<br>  **Ash, GU12 6LH (GB)**<br><br>(74) Representative: **Stones, James Alexander**<br>**Beck Greener**<br>**Fulwood House**<br>**12 Fulwood Place**<br>**London WC1V 6HR (GB)** |

(54) **A gas storage container**

(57)     At least one inner vessel is provided within a container for storing and/or dispensing gas under pressure to assist in filling the container with gas. The container comprises an outer vessel defining an interior space and a fluid flow control unit for controlling fluid flow into and out of the container. The inner vessel(s) defines a part of the interior space of container and is intended to hold cryogenic fluid in spaced relationship with respect to the outer vessel. Since the inner vessel is in fluid flow communication with the remaining part of the interior space, when the cryogenic fluid becomes gaseous, the container fills with gas. The inner vessel(s) has a mouth for receiving cryogenic fluid from the fluid flow control unit which is free of the fluid flow control unit.

FIG. 1

## Description

The present invention relates to gas storage containers, such as gas cylinders, for storing and/or dispensing gas under pressure, usually high pressure. In particular, the present invention relates to a modified gas storage container that facilitates filling of the container with gas under high pressure.

Gas cylinders containing a permanent gas under high pressure, e.g. 100 bar or more, are typically prepared by simply pumping the gas into the cylinders using a gas compressor. Such a filling process tends to be used at sites where smaller numbers of cylinders are filled. However, each cylinder must be filled slowly (e.g. over the course of an hour or two) to control and/or minimise the heating of the cylinder by adiabatic compression of the gas. Filling the cylinder is, therefore, one of the rate-limiting steps in preparing the gas cylinders. In addition, a significant amount of energy is required to compress the gas to sufficient pressure to fill the cylinder.

The cylinder and/or the gas being fed to the cylinder may be cooled, thereby increasing the rate at which the cylinder may be filled. Water- or glycol-sprays, or heat exchangers have been used in this regard. Whilst cooling the cylinder and/or the gas in this way does enable a somewhat faster fill, the overall filling process is more expensive and the effect is relatively limited. In addition, there is no reduction in energy consumption.

Since most of the permanent gases are stored in liquid form at cryogenic temperatures, energy consumption during cylinder filling can be reduced by using high pressure cryogenic pumps to raise liquid, not gas, to high pressure. The high pressure liquid may then be vaporised and used to fill the cylinders. Such a filling process tends to be used at sites where larger numbers of cylinders are filled. However, high pressure cryogenic pumps are complicated, expensive and subject to breakdown. In addition, it is not possible to fill the cylinders any faster since the liquid from the cryogenic pumps is vaporised gas before being used to fill the cylinders.

Direct injection of a cryogenic liquid into a cylinder at low pressure has been contemplated in the art. As the cylinder warmed back up to room temperature and the cryogenic liquid evaporated, the requisite high pressure would be achieved. Such a filling process would have at least two advantages; first, the process would consume significantly less (e.g. of the order of 100 times less) energy, and secondly, the process would be much quicker (e.g. of the order of one or two minutes). Unfortunately, such a direct injection process is not suitable for filling standard high pressure cylinders, which are made of steel and which become dangerously embrittled at cryogenic temperatures.

US 1,414,359 (published in May 1922) discloses a steel gas cylinder containing an internal, thin walled auxiliary vessel for receiving liquefied gas. At the upper end of the auxiliary vessel, immediately under the valve head, there is a row of holes to provide gas flow communication between inside the inner vessel and the remainder of the cylinder interior. The auxiliary vessel may be attached to the conical stopper at the top of the cylinder, or to a conical stopper arranged in the base of the cylinder. The auxiliary vessel may be formed from a pipe of soft expansible metal inserted through the neck of the cylinder and inflated by air or hydraulic pressure to the required extent. The size of the auxiliary vessel may be selected to accommodate sufficient liquefied gas to fill several steel cylinders with compressed gas. It is disclosed that the steel cylinder is preferably put in a water bath during charging and subsequent evaporation of the liquefied gas to limit the extent to which the walls of the cylinder cool down, and that excessive cooling of the cylinder must be avoided under all circumstances so as not to go below the lower limit of ductility of the steel.

US 3,645,291 A (published in February 1972) discloses a gas cylinder within the cavity of which is provided an inner vessel to receive liquefied gas charged to the cylinder to isolate the liquefied gas from the walls of the cylinder to ensure slower and more even evaporation of the liquefied gas. The inner vessel is provided with gas outlet means to allow gas to pass into the reminder of the cylinder cavity on evaporation. The cylinder has a neck which is provided with an inner vessel constituted by a downward extension of the neck and an otherwise closed liquefied gas-receiving vessel into which the extension opens. The extension is provided with at least one radially extending hole through which gas can flow into and out of the remainder of the cylinder cavity. It is disclosed that the inner vessel is constructed of cryogenically acceptable material such as Mylar™ foil, and that since the walls of the gas should not come into contact with the liquefied gas, the cryogenic requirements of the material of the wall are somewhat less than the requirements of the inner vessel. In the exemplified embodiment, the inner vessel comprises an aluminium tube supporting a closed Mylar™ bag. It is disclosed that liquefied nitrogen, liquefied oxygen or liquefied argon may be charged to the cylinder, typically in sufficient quantity to generate a gas at a pressure of 1,800 lb/in$^2$ (124 bar).

The system disclosed in US 3,645,291 A has not been developed and is understood to have now been abandoned due to problems with the short life and robustness of the Mylar™ bag, and detection of bag failure. In addition, there are difficulties inherent in filling the bag. For example, as the bag fills with cryogenic liquid, the liquid begins to boil causing some of the liquid being injected to be forced back out of the cylinder.

GB 2,277,370 A (published in October 1994) exemplifies a gas cylinder having a coating on the inner surface thereof of heat insulation material such as high density expanded polystyrene. The gas cylinder is in fluid flow communication with a bank of empty cylinders for filling. In use, the lined cylinder is filled with cryogenic liquid and allowed to evaporate. The gas so produced then fills the bank of empty cylinders with gas under pressure. In this way, a 50 L (water) capacity cylinder when insulated would hold about 38 L of liquid nitrogen which, if hydrostatically full, is equivalent to about 3 cylinders at 200 bar, or 6 cylinders at 100 bar.

The system disclosed in GB 2,277,370 A has several drawbacks. For example, there are inherent difficulties in lining the inside of a cylinder. In addition, a substantial volume of foam containing gas, volatile or particulate materials, or other contaminants is left inside the cylinder from previous fills which could end up contaminating gas of otherwise very high purity.

It is an object of preferred embodiments of the present invention to provide a container for storing and/or dispensing gas under pressure that is easy and/or quick to fill, preferably without one or more of the drawbacks of the prior art.

According to a first aspect of the present invention, there is provided a gas storage container for storing and/or dispensing gas under pressure, said container comprising:

an outer vessel defining an interior space for holding gas under pressure, said outer vessel comprising an opening for receiving a fluid flow control unit;
a fluid flow control unit mounted within said opening for controlling fluid flow into and out of the outer vessel; and
at least one inner vessel provided within said interior space, said inner vessel(s) defining a part of said interior space for holding cryogenic fluid in spaced relationship with respect to said outer vessel and being in fluid flow communication
with a remaining part of said interior space, the or each inner vessel having a mouth for receiving cryogenic fluid from said fluid flow control unit, wherein said mouth of the or each inner vessel is open to the remaining part of said interior space.

Gas storage containers according to the present invention are typically filled more easily, and more reliably with less wastage than known cylinders having inner vessels that are charging with cryogenic liquid. In this connection, the Inventors note that cryogenic fluid charged to inner vessels in gas storage containers according to the present invention becomes gaseous at a more even and controlled rate than in prior art containers. In addition, little or no cryogenic fluid is forced back out of the fluid flow control unit during injection of the cryogenic fluid, thereby improving safety and reducing wastage.

The present invention may be applied to any type of container for storing and/or dispensing gas under pressure, such as gas tanks or other gas storage vessels. However, the present invention has particular application to gas cylinders, e.g. high pressure gas cylinders made from, for example, steel or aluminium. In some preferred embodiments, the container is a single gas cylinder. In other preferred embodiments, the container is a central "primary" cylinder in parallel gas flow communication with a plurality of "secondary" cylinders in a multi-cylinder pack. In such embodiments, the outer vessel of the central cylinder is usually made from aluminium, and the outer vessel of each secondary cylinder is usually made from steel.

The gas storage container may be a cylinder having an inner surface lined with heat insulation material. A suitable example of such a cylinder is described in GB 2,277,370, the disclosure of which is incorporated herein by reference. However, the gas storage container is preferably unlined.

Gas storage containers according to the present invention are suitable for storing and/or dispensing a pure gas or a gas mixture. The containers have particular application in storing and/or dispensing a pure gas that may be liquefied, or a gas mixture having at least a major component that may be liquefied, and charged to the inner vessel(s) in the form of a cryogenic fluid comprising liquefied gas.

Suitable gases include permanent gases. Examples of suitable gases include oxygen ($O_2$), hydrogen ($H_2$), nitrogen ($N_2$), helium (He), argon (Ar), neon (Ne), krypton (Kr), xenon (Xe) and methane ($CH_4$). Examples of suitable gas mixtures include welding gases, e.g. gas mixtures containing $N_2$ or Ar, together with carbon dioxide ($CO_2$) and, optionally, $O_2$; breathing gases, e.g. air; "nitrox" ($O_2$ and $N_2$); "trimix" ($O_2$, $N_2$ and He); "heliox" (He and $O_2$); "heliair" ($O_2$, $N_2$ and He); "hydreliox" (He, $O_2$ and $H_2$); "hydrox" ($H_2$ and $O_2$); and "neonox" ($O_2$ and Ne); anaesthetic gases, e.g. gas mixtures comprising $O_2$ and nitrous oxide ($N_2O$); and "beer" gases, e.g. gas mixtures comprising $CO_2$ and $N_2$.

The "cryogenic fluid" comprises liquefied gas and may be a liquefied pure gas, a mixture of liquefied gases, or a liquid/solid mixture comprising liquefied first gas and solidified second gas, typically in the form of a cryogenic slurry or slush.

In some preferred embodiments, the cryogenic fluid is a cryogenic liquid such as liquid oxygen (LOX), liquid hydrogen, liquid nitrogen (LIN), liquid helium, liquid argon (LAR), liquid neon, liquid krypton, liquid xenon, and liquid methane, or appropriate mixtures thereof necessary to form a particular gas mixture.

In other preferred embodiments, the cryogenic fluid is a liquid/solid mixture comprising liquefied first gas and solidified second gas. The liquefied first gas may be one or more of the cryogenic liquids listed above, and the solidified second gas is typically solid $CO_2$ or $N_2O$, as appropriate to form a particular gas mixture.

A suitable liquid/solid mixture is typically stable for at least 10 mins, preferably at least 30 mins, and more preferably up to 1 hour, at ambient pressure, e.g. from about 1 to about 2 bar. The term "stable" in this context means that the mixture may be handled at ambient pressure without significant loss of one of more of the components.

The liquid/solid mixture is typically fluid enabling the mixture to be poured, pumped/piped along a conduit, and valved. Depending on the relative proportions of liquefied gas(es) and solidified gas(es), the consistency and appearance of the mixture may range from a thick, creamy substance (not unlike whipped cream or white petrolatum) to a thin, milky substance. The range of viscosity of the mixture is typically from about 1 cPs (for thin, milky mixtures) to about 10,000 cPs (for thick, creamy mixtures). The viscosity may be from about 1,000 to about 10,000 cPs. Preferably, the mixture is composed of finely divided solid particles suspended in a liquid phase. The liquid/solid mixture may be described as a cryogenic slurry or slush.

The Inventors have observed that, when a liquid argon/solid carbon dioxide mixture is allowed to warm to ambient temperature, the liquid argon evaporates first to leave a substantial amount of the solid carbon dioxide behind which then gradually sublimes. A uniformly blended argon/carbon dioxide mixture is formed by diffusion of the gases within the container. The Inventors expect that other liquid/solid mixtures containing solid carbon dioxide will behave in a similar manner.

The relative proportions of the liquid and solid components in the mixture are dictated by the desired gas mixture and by the desire for the mixture to have fluid characteristics. In preferred embodiments, there is from about 40 wt % to about 99 wt % liquid component(s) and from about 1 wt % to about 60 wt % solid component(s).

The identities of the first and second gases will be dictated by the gas mixture filling the container. Examples of suitable gas mixtures for use with the present invention include welding gases; "beer" gases; anaesthetic gases; and fire extinguishing gases.

Suitable welding gases include nitrogen/carbon dioxide mixtures (e.g. from about 80 wt % to about 95 wt % nitrogen and from about 5 wt % to about 20 wt % carbon dioxide), and argon/carbon dioxide mixtures (e.g. from about 80 wt % to about 95 wt % argon and from about 5 wt % to about 20 wt % carbon dioxide). Oxygen may replace some of the nitrogen or argon gas in such welding gas mixtures. Thus, the welding gases may contain from 0 wt % to about 5 wt % oxygen.

A particularly suitable welding gas contains from about 80 wt % to about 90 wt % argon, from 0 wt % to about 5 wt % oxygen, and from about 5 wt % to about 20 wt % carbon dioxide. An example of a suitable welding gas contains about 2.5 wt % oxygen, from about 7 wt % to about 20 wt % carbon dioxide with the balance (from about 77.5 wt % to about 90.5 wt %) being argon.

Suitable "beer" gases include nitrogen/carbon dioxide mixtures (e.g. from about 40 wt % to about 70 wt % nitrogen and from about 30 wt % to about 60 wt % carbon dioxide).

Suitable anaesthetic gases include oxygen/nitrous oxide mixtures (e.g. from about 65 wt % to about 75 wt % oxygen and from about 25 wt % to about 35 wt % nitrous oxide).

Suitable fire extinguishing gases include nitrogen/carbon dioxide mixtures (e.g. in a weight ratio of 1:1).

The first gas may therefore be selected from the group consisting of nitrogen; argon; and oxygen. Other suitable gases include helium; neon; xenon; krypton; and methane.

The second gas is typically stable in solid form at ambient pressure. The term "stable" in this context means that the solid form of the second gas does not become gaseous (either by sublimation, or by melting and evaporation) unduly rapidly at ambient pressure so that the solid form may be handled easily under these conditions. The second gas is typically selected from the group consisting of carbon dioxide and nitrous oxide.

The liquid/solid mixture may be a binary mixture of a liquefied gas and a solidified gas. However, the liquid/solid mixture may be a mixture of more than one liquefied gas and one solidified gas, or a mixture of one liquefied gas and more than one solidified gas. In some preferred embodiments, the liquid/solid mixture comprises a liquefied third gas. The liquefied third gas may be immiscible with the liquefied first gas but, in preferred embodiments, the liquefied first and third gases are miscible with each other.

In preferred embodiments in which the gas storage container is filled with a welding gas, the liquefied first gas is liquid argon, and the solidified second gas is solid carbon dioxide. In such embodiments, the liquid/solid mixture may also comprise liquid oxygen which is miscible with liquid argon. Thus, the liquid/solid mixture may comprise from about 80 to about 90 wt % liquid argon; from 0 to about 5 wt % liquid oxygen; and from about 5 to about 20 wt % solid carbon dioxide.

Suitable cryogenic liquid/solid mixtures are disclosed in co-pending European patent application No. 10 195 491.5 filed on 16th December 2010, the disclosure of which is incorporated herein by reference.

The term "under pressure" is intended to mean that the gas is at a pressure that is significantly above atmospheric pressure, e.g. at least 40 bar. The gas storage container is typically suitable for storing and/or dispensing gas up to a pressure of about 500 bar. Usually, the container is suitable for storing and/or dispensing gas at a pressure of at least 100 bar, e.g. at least 200 bar, or at least 300 bar.

The or each inner vessel is preferably "loose-fitting", i.e. not fixedly mounted to the outer vessel.

The or each inner vessel is preferably "thin-walled" since the inner vessel(s) is exposed only to isostatic pressure. The or each inner vessel usually has a base and enclosing wall(s) that are sufficiently thick such that the inner vessel is able to support itself when containing cryogenic fluid. The thickness of the base and enclosing wall(s) depend on the material from which the inner vessel is made but, typically, the base and wall(s) of the inner vessel(s) have a thickness from about 0.1 mm to about 10 mm, preferably from about 0.25 mm to about 5 mm. For example, where an inner vessel is made from a metal, e.g. steel, aluminium or nickel, the thickness of the base and wall(s) is typically no more than about 2 mm, e.g. from about 1 mm to about 2 mm. In addition, where the inner vessel is made from a polymeric material, e.g. silicone or polyester film, the thickness of the base and the wall(s) is typically a little more, e.g. less than about 5 mm, e.g. from about 1.5 mm to about 4 mm.

The or each inner vessel is preferably in the form of an "open-topped" or "open-ended" can, i.e. a vessel having a base and an enclosing wall, typically (although not necessarily) circular, provided substantially perpendicular to the base. The mouth of such an inner vessel is the open end. In some embodiments, the open end of said can is in the form of an inverted cone.

The gas storage container preferably comprises at least one support for supporting the inner vessel(s) in said spaced relationship with respect to said outer vessel. Any suitable support may be used such as spacer arms and/or legs for the inner vessel(s), or a support base on which the inner vessel(s) sits. The support(s) may be (although are not necessarily) fixed to the inner vessel(s). The or each support is usually made from a cryogenic resistant material, and typically has a low heat transfer coefficient. Suitable materials include plastics and polymers, but packing material may also be used.

The container may comprise a plurality of inner vessels. For example, each inner vessel may be a long thin-walled pipe having a closed bottom end and an open top end forming the mouth. The diameter of the pipe may be more than the diameter of the opening of the outer vessel (in which case, the pipes would be introduced into the outer vessel prior to enclosure) or less than that diameter of the opening in the outer vessel (in which case, each pipe could be inserted into the outer vessel via that opening).

In preferred embodiments, however, the container comprises a single inner vessel. In such embodiments, the mouth of the inner vessel preferably has a diameter that is greater than that of said opening. The diameter of the mouth of the inner vessel may be at least 100 % greater, preferably at least 200 % greater, e.g. at least 400 % greater, than that of the opening.

The or each inner vessel is usually self-supporting, even when charged with cryogenic fluid. The inner vessel(s) may be rigid, i.e. self-supporting and possibly resistant to deformation. Alternatively, the or at least one of the inner vessels may be deformable. In such embodiments, the or each inner vessel may be deformed, e.g. by rolling, folding or crushing, and then inserted into the container through the opening in the outer vessel. The or each inner vessel may then be unfurled inside the container using gas pressure or hydraulic pressure. Alternatively, in embodiments where the or each inner vessel is resilient, the inner vessel resumes its original shape unaided inside the container. In this connection, either the inner vessel is made from a resilient material or the inner vessel comprises an inherently resilient, or "spring-loaded", frame supporting a deformable sheet material forming the base and walls of the vessel.

Since it is to be charged with cryogenic fluid, the or each inner vessel is typically made from a material that is resistant to embrittlement at the cryogenic temperatures to which it will be exposed. Suitable materials include specific metals, e.g. aluminium; nickel; and steel, for example, stainless steel; and polymeric materials, e.g. silicones such as catalytically set silicone and polydimethylsiloxanes; polyesters such as polyethylene terephthalate (PET or mylar™); polyethylenes such as polytetrafluoroethylene (PTFE); and perfluorinated elastomers (PFE).

The inner vessel may comprise at least one aperture, in addition to the mouth, for providing additional gas flow communication between the part of the interior space defined by the inner vessel and the remaining part of the interior space defined by the outer vessel. Such aperture(s) would typically be provided in the wall of the inner vessel, above the maximum level of cryogenic fluid to be charged to the vessel. However, in preferred embodiments, the mouth is preferably the sole opening in the or each inner vessel.

The term "spaced relationship" is intended to mean spaced apart from or having a gap therebetween. Thus, in the present invention, there the outer vessel is spaced apart from the inner vessel(s) such that the cryogenic fluid charged to the inner vessel(s) is isolated from the outer vessel by a gap provided therebetween. The gap is usually more than 1 mm, and preferably more than 5 mm.

The term "open" is intended to mean at least not entirely closed. Thus, in the present invention, the mouth is at least not entirely closed and, preferably entirely open, to the remaining part of the interior space. In preferred embodiments, the mouth is free of direct attachment to any part of the container, particularly the fluid flow control unit.

The mouth of the or each inner vessel is preferably in spaced relationship with respect to the fluid flow control unit.

The interior space typically has a top half and a bottom half The extent to which the inner vessel extends into the bottom half or top half of the interior space depends on the amount of cryogenic fluid to be charged to the inner vessel. The or each inner vessel may extend from the bottom half into the top half of the interior space. For example, in embodiments in which the container is the central primary cylinder in a multi-cylinder pack, the inner vessel may extend essentially from near the bottom of the interior space to the top, or up to 90% of the length of the interior space. However, in embodiments in which the container is an individual gas cylinder, the inner vessel is preferably provided entirely within the bottom half, or even bottom third, of the interior space.

The Inventors have discovered that providing the inner vessel entirely within the bottom half, or preferably bottom third, of the interior space enables the cryogenic fluid to become gaseous at a more constant rate, thereby improving the filling processes. Without wishing to be bound by any particular theory, the Inventors understand that convection is responsible for accelerating evaporation of a cryogenic liquid. By providing the inner vessel only in the bottom half (or third) of the interior space rather than nearer the top, convection is minimised thereby suppressing acceleration of the evaporation process and providing a more even and controlled rate of fill.

The inner vessel(s) within the gas storage container may be charged with the cryogenic fluid using a nozzle inserted into a passageway through the fluid flow control unit. The nozzle typically comprises a first conduit arrangement through which the cryogenic fluid is fed, and a second conduit arrangement through which displaced air and/or gaseous cryogenic fluid is vented from the container when charging the fluid to the container. The first conduit arrangement may be within and preferably coaxial with the second conduit arrangement. In embodiments where the inner vessel is spaced apart from the fluid flow control unit, the nozzle typically extends through the fluid flow control unit to below the level of the mouth of the inner vessel. In this way, spray from the end of the nozzle is caught by the walls of the inner vessel.

The passageway may be opened and closed manually using a pressure cap or alike although in preferred embodiments, the passageway has a valve located at the end of the passageway inside the container that is biased in the closed position by a spring.

The process may comprise opening the passageway by removing the pressure cap, and then inserting a nozzle into the open passageway and feeding the cryogenic fluid into the container. Alternatively, the process may comprise opening the passageway by inserting the nozzle with the end of the nozzle pushing open the valve against the spring.

Suitable nozzle arrangements are disclosed in co-pending European patent application No. 10 195 461.8 filed on 16th December 2010, the disclosure of which is incorporated herein by reference.

Once the required amount of cryogenic fluid has been fed to the container, the nozzle is removed from the passageway which may then be closed by spring-action on the valve, or by replacing the pressure cap.

Alternatively, the container may comprises a conduit arrangement provided within said interior space for feeding cryogenic fluid from said fluid flow control unit to the or each inner vessel. The conduit arrangement may be a dip tube extending from the fluid flow control unit to below the level of the mouth of the inner vessel. In this way, spray from the end of the dip tube is caught by the walls of the inner vessel.

As mentioned above, the or each inner vessel may be introduced into the outer vessel of the container after the outer vessel has been formed. Thus, according to a second aspect of the present invention, there is provided a process for manufacturing a gas storage container according to the first aspect, said process comprising:

   providing an outer vessel defining an interior space for holding gas under pressure, said outer vessel comprising an opening for receiving a fluid flow control unit;

   inserting the or each inner vessel into said interior space of said outer vessel through said opening, said inner vessel(s) defining a part of said interior space for holding cryogenic fluid in spaced relationship with respect to said outer vessel and being in fluid flow communication with a remaining part of said interior space, the or each inner vessel having a mouth for receiving cryogenic fluid from said fluid flow control unit; and

   mounting a fluid flow control unit within said opening,

wherein said mouth of the or each inner vessel is open to the remaining part of said interior space.

In embodiments where the or each inner vessel is deformable, said process preferably comprises deforming said inner vessel(s) prior to inserting said inner vessel(s) into said interior space of said outer vessel in a deformed state. In embodiments where the or each inner vessel is resilient, the vessel(s) resumes its original shape unaided inside the container. In other embodiments, perhaps where the or each inner vessel is not resilient, gas pressure or hydraulic pressure may be used to unfurl the or each inner vessel after insertion into said open cylinder and prior to closing said container.

In other embodiments, the or each inner vessel may be introduced into the outer vessel of the container during formation of the outer vessel itself. Some gas storage containers have an outer vessel that is made from different sections, e.g. a base section and at least one further section, e.g. a top section and perhaps one or more middle sections. Thus, according to a third aspect of the present invention, there is provided a process for manufacturing a container according to the first aspect, said process comprising:

   inserting at least one inner vessel into a first section, preferably a base section, of an outer vessel;

   assembling said outer vessel from said first section and at least one further section to form said outer vessel defining an interior space for holding gas under pressure, and comprising an opening for receiving a fluid flow control unit; and mounting a fluid flow control unit within said opening.

The first and further sections of the outer vessel may be bonded together by any suitable process including by welding, and particularly by friction welding. This process is particularly useful for producing containers to be wrapped in para-aramid synthetic fibre, e.g. Kevlar™; or carbon fibre.

Most gas cylinders for use above 100 bar are seamless forged steel or aluminium vessels. Steel cylinders are forged by heating a steel billet to at least 1000°C, and then formed by "deep drawing" the heated billet in successive steps using a die and a press, to form a deep cylindrical "cup" shape as tall as the final cylinder. The steel has cooled somewhat at this stage and thus, the top end is then reheated until it is hot enough to forge again, and then is "necked" by wheels rotating around the top, until the neck is almost closed. After cooling, the cylinder is checked for cracks, the neck is machined out with a thread, and the fluid flow control unit is then screwed in. The internal vessel may be added before the necking process. Aluminium cylinders are made in a similar process.

Thus, according to a fourth aspect of the present invention, there is provided a process for manufacturing a gas cylinder according to the first aspect, said process comprising:

forging an open-ended cylinder having a closed base end, a circular enclosing wall and an open end;
inserting the or each inner vessel into said open-ended cylinder through said open end;
enclosing said open-ended cylinder by forging a shoulder and a neck from said circular enclosing wall at said open end, to form an outer vessel defining an interior space for holding gas under pressure;
forming an opening through said neck to said interior space suitable for receiving a fluid flow control unit; and
mounting a fluid flow control unit within said opening.

The heat necessary to forge the cylinder may mean that the inner vessel will have to be made of a material which resists melting, such as steel or nickel. A low cost steel can, even though thin walled and not corrosion protected in any way, would not normally corrode inside a gas cylinder, where the gas is very dry. The gas added is dry, and the cylinder is usually protected using a residual pressure valve, preventing gas pressure to go below a minimum threshold of, e.g. 4 bar. However, depending on processing, the cylinders may be cool enough than an aluminium or even a polymeric inner vessel may be used. The latter would avoid any potential difficulty with corrosion should a cylinder be back-contaminated with water.

The gas storage container is typically filled by charging an amount of cryogenic fluid via the fluid flow control unit into the inner vessel(s). The container is then sealed or closed to the passage of gas into and out of the container, and the cryogenic fluid is then allowed to become gaseous thereby filling the container, and any secondary containers associated therewith, with gas under pressure.

According to a fifth aspect of the present invention, there is provided a process for filling a gas storage container according to the first aspect with gas under pressure, said process comprising:

charging said inner vessel(s) with cryogenic fluid comprising liquefied gas through said fluid flow control unit; and

closing said container to the passage of gas into and out of the container, and allowing said fluid to become gaseous within said container.

Charging the cryogenic fluid to the inner vessel(s) of a single container usually takes no more than 1 min and may take a little as 10 to 20 s. The container usually takes less than 1 h to become fully pressurised with a pure gas.

As would be readily appreciated by the skilled person, where a gas storage container is to be filled with a pure gas under pressure, the quantity of cryogenic liquid to be fed, or charged, to the inner vessel(s) can be calculated using the ideal gas equation, viz:

$$PV = nRT$$

where P is the desired pressure of the gas in the container; V is the volume of the container; n is the number of moles of gas; R is the gas constant; and T is the absolute temperature.

Once a particular container is selected, V and the maximum P are known, as is R and the ambient temperature. The value of n may then be calculated thus:

$$n = PV/RT$$

The number of moles, n, of gas is then converted into mass, M, of gas in grams (g) by multiplying by the molecular weight, A:

$$M = nA$$

For real gases at pressure above say 50 bar, there are corrections to be added to this basic formula which depend upon the attractive and repulsive forces between molecules, and the finite and different size of molecules. These corrections can be taken account of by including a factor Z, the "compressability" of the gas, in the equation:

$$PV = nRTZ$$

Tabulations exist for many gases over a wide range of pressures and temperatures, and complex approximate formulae exist for some gases.

The calculation may be adapted as appropriate to determine the amount of a mixture of two or more cryogenic liquids, or of a liquid/solid mixture comprising a liquefied first gas and a solidified second gas, that would be required to fill a gas storage container with a gas mixture under pressure.

In embodiments where the inner vessel is in the form of a can having an open end in the form of an inverted cone and comprising at least one support for supporting said can in said spaced relationship with respect to said outer vessel, said process preferably comprising tilting said container to increase the surface area of said cryogenic fluid in said inner vessel.

Cylinders according to the present invention may be filled using a high speed single cylinder fill on production (roller) line, in a process similar to propane filling. The filling line may comprise a carousel with 3 or 4 filling outputs and a centrally-located tank. A liquid cryogen may be pumped into the inner vessel of the cylinder using a cryogenic pump, or using top gas pressure on a reservoir tank may be used. The top gas could be a different non-condensable gas, e.g. He, or the same gas, e.g. Ar top pressure to fill liquid argon (LAr).

The amount of cryogenic fluid charged to the container may be metered gravimetrically, e.g. using a weigh-scale operated fill; or by liquid mass flow meter fill as appropriate.

The cryogenic fluid may be sub-cooled prior to charging, e.g. using LIN to sub-cool LAr.

The container may be charged with the cryogenic fluid without venting displaced air and/or gaseous cryogenic fluid, by increasing drive pressure. However, in preferred embodiments, the container is vented during the charging step, e.g. via a customer valve and/or countercurrent flow through the nozzle through which cryogenic fluid is charged to the container.

The container may be filled non-vertically to separate gas and liquid flows more cleanly.

The fluid flow control unit typically allows gas venting during injection of the cryogenic fluid. This may be achieved using a control unit have dual fluid paths and/or by using a coaxial filling system, where liquid cryogen is poured or pumped down a thin-walled pipe provided inside a metal tube. Gas vents up the annular space during filling, preventing premature build-up of pressure.

A container according to the present invention may be filled with gas mixtures by pre-fill with the smaller, lower pressure component as a liquid, then follow with the major component liquid fill. However, the first component will begin to evaporate and, thus, the second component is pumped in against the pressure of gas already in the cylinder.

The container could be top-filled with the minor component(s) in gaseous form, and the major component added as a liquid on top. However, again the major component is pumped in against the pressure of gas already in the cylinder. Alternatively, the steps could be reversed and the major component could be added as a liquid first, with the minor component(s) being added in gaseous form thereafter. Gases added on top of the liquid would "catalyse" the liquid into boiling off much more quickly, because as the gas pressure rises, the thermal transfer coefficient will rise.

However, it is more convenient to fill a mixture containing all of the components at cryogenic temperature, e.g. in the form of a cryogenic liquid/solid mixture as described above.

The following is a description, by way of example only and with reference to the accompanying drawings, of presently preferred embodiments of the present invention. Regarding the drawings:

Figure 1 is a schematic cross-sectional representation of one embodiment of a gas container according to the present invention;
Figure 2 is a schematic cross-section representation of the embodiment of the present invention depicted in Figure 1 as applied to a multi-cylinder pack;
Figure 3 is a schematic cross-sectional representation of another embodiment of a gas container according to the present invention;
Figure 4 is a schematic representation of the gas container depicted in Figure 3 tilted from the vertical;
Figure 5 is a schematic cross-sectional representation of one arrangement of apparatus for filling the gas cylinder depicted in Figure 1; and
Figure 6 is a graph comparing pressure and temperature curves over time for (i) a gas cylinder having a internal bag charged with LIN, and (b) a gas cylinder having an internal can charged with LIN.

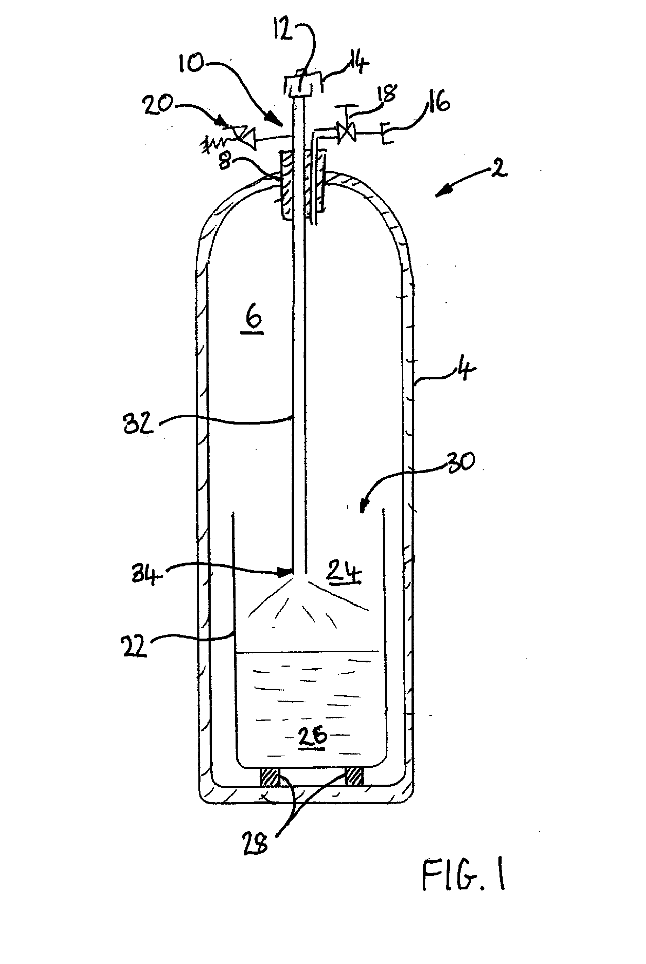

Regarding Figure 1, a gas cylinder 2 has an outer vessel 4 defining an interior space 6 for holding gas under pressure. The outer vessel 4 is made from steel and has an opening 8 for receiving a fluid flow control unit 10 for controlling fluid flow into and out of the cylinder 2. The fluid flow control unit 10 has a liquid fill inlet 12 with a pressure cap 14, and a customer outlet 16 having a control valve 18. The fluid flow control unit 10 also has a pressure relief valve 20.

An inner vessel 22 made from steel is provided entirely within the bottom half of the interior space 6. In another embodiment, the inner vessel 22 is made from catalytically set silicone. The inner vessel 22 defines a part 24 of the interior space for holding cryogenic fluid 26 in spaced relationship with respect to the outer vessel. A support 28 provides the spaced relationship between the inner vessel 22 and the outer vessel 4. The inner vessel 22 has a mouth 30 for receiving cryogenic fluid from the fluid flow control unit 10 via a conduit 32, or dip tube, made from aluminium. The end 34 of the conduit 32 extends below the mouth 30 of the inner vessel 22, thereby ensuring that spray from the conduit 32 is caught by the inner vessel 22. The end 34 of the conduit 32 does not usually extend so far below the mouth 30 of the inner vessel 22 such that it would be below the surface of the cryogenic fluid 26 after the inner vessel 22 has been charged with the fluid.

The mouth 30 is open to the remaining part of the interior space 6 and thereby provides fluid flow communication between the inner vessel 22 and the remaining part of the interior space 6.

The cylinder 2 is filled by removing the pressure cap 14 and feeding cryogenic fluid down the conduit 32 into the inner vessel 22. Cryogenic fluid begins to evaporate as soon as it comes into contact with the inner vessel 22. The control valve 18 on the customer outlet 16 is usually open to allow gas to escape from the cylinder 2.

The amount, e.g. volume or mass, of cryogenic fluid to be fed to the cylinder 2 is pre-determined based on the target pressure of the gas in the cylinder (and, hence, the volume of the cylinder, and the densities of the cryogenic fluid and the gas), and feed to the cylinder is metered to ensure that the correct amount of cryogenic fluid is added. Once the required amount of cryogenic liquid has been added to the cylinder 2, the inlet 12 is closed off with the pressure cap 14, and the control valve 18 in the customer outlet 16 is closed. The cryogenic fluid is then allowed to become gaseous by evaporation, and where appropriate sublimation, thereby filling the cylinder 2 with gas to the desired pressure.

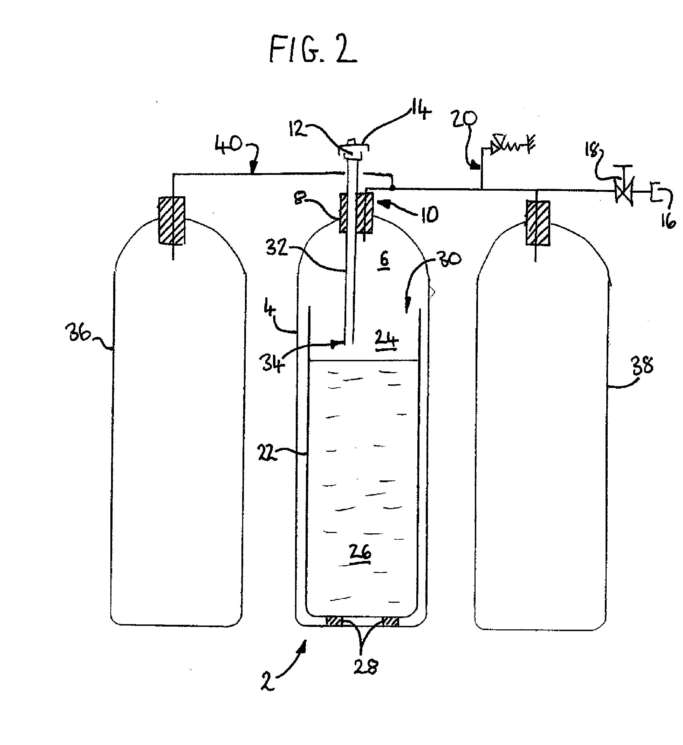

Figure 2 depicts an embodiment of the present invention as applied to a multi-cylinder pack. The central cylinder of the pack is similar in design to the cylinder depicted in Figure 1 and the features common to both figures have been given the same reference numerals. The following is a description of the features that distinguish the embodiment depicted in Figure 2 from the embodiment depicted in Figure 1.

The gas cylinder 2 is the central, or primary, cylinder in a multi-cylinder pack including a plurality of secondary cylinders 36, 38 surrounding the central cylinder 2. Since the central cylinder 2 is responsible for filling all of the secondary cylinders 36, 38, the inner vessel 22 of the central cylinder 2 in Figure 2 is larger than the inner vessel 22 of the gas cylinder 2 in Figure 1 as it needs to hold significantly more cryogenic fluid. The inner vessel 22 extends, therefore, into the top half of the interior space 6 such that part 24 of the interior space 6 defined by the inner vessel 22 is the majority, e.g. from 60 to 80 %, of the total interior space 6 defined by the outer vessel 4.

The secondary vessels 36, 38 are in fluid flow communication with the central cylinder 2 via a conduit arrangement 40 which includes the pressure relief valve 20 and the customer outlet 16 and control valve 18.

The inner vessel 22 of the central cylinder 2 is charged with a metered amount of cryogenic fluid in substantially the same way as the cylinder depicted in Figure 1.

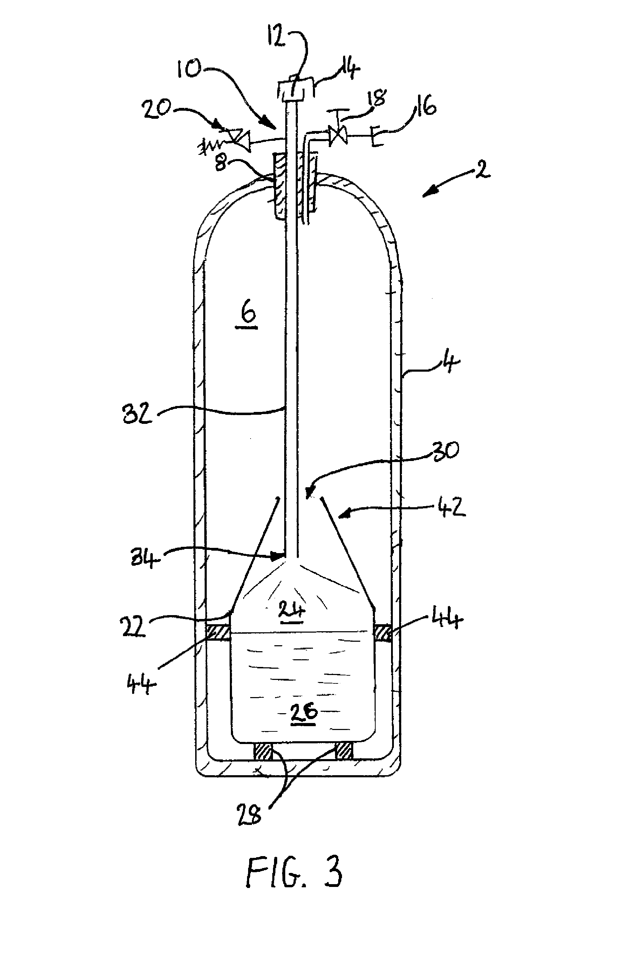

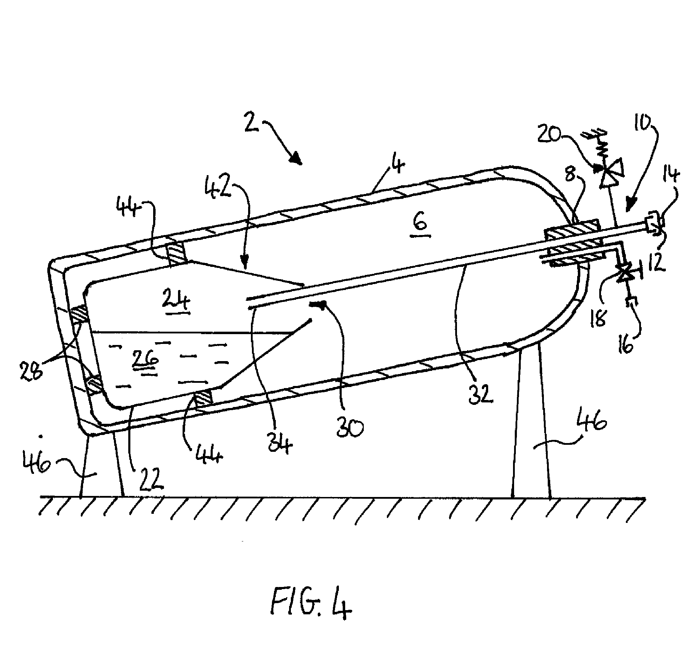

The gas cylinder depicted in Figures 3 and 4 is substantially similar to that depicted in Figure 1 and the common features between the two figures have been given the same reference numerals.

The open end of the inner vessel 22 in the cylinder 2 of Figure 3 is in the form of an inverted cone 42. This form of inner vessel 22 allows the cylinder 2 to be tilted from the vertical after the inner vessel 22 has been charged with the cryogenic fluid 26. Tilting the cylinder 2 in this way has the effect of increasing the surface area of the cryogenic fluid 26 and thereby increasing the rate at which the cylinder 2 fills with gas.

Figure 4 depicts the cylinder 2 tilted from the vertical. Supports 44 maintain the spaced relationship between the inner vessel 22 and the outer vessel 4. The cylinder is shown resting in a support frame 46.

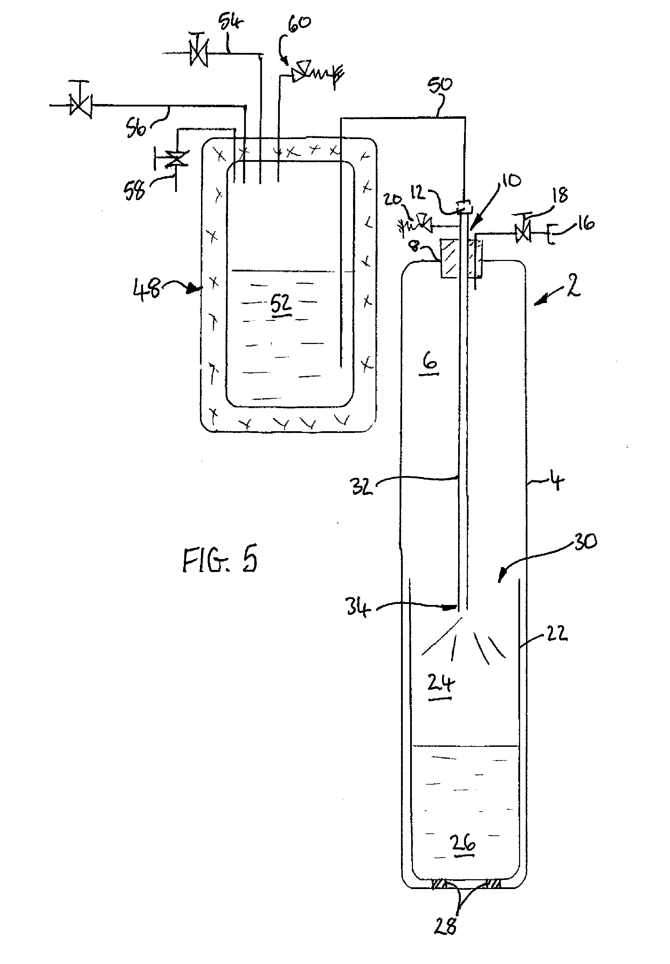

Figure 5 depicts a system for charging the cylinder 2 of Figure 1 with cryogenic fluid. The inlet 12 of cylinder 2 is connected to an insulated liquid transfer vessel 48 via a conduit 50 which extends into a reservoir 52 of cryogenic fluid. Liquid from the reservoir 52 in the liquid transfer vessel 48 is fed to the inner vessel 22 of cylinder 2 by pressure from a top gas supplied through a line 54. The amount of liquid fed to the inner vessel 22 is metered by any suitable means (not shown) such as a flowmeter in conduit 50, or by measuring the weight loss from liquid transfer vessel 48 or the weight gain of cylinder 2, or by measuring the flow of top gas into the liquid transfer vessel. The reservoir 52 of cryogenic liquid is replaced from source of bulk liquid via line 56. The liquid transfer vessel also has a try cock 58 and a pressure relief valve 60.

EXAMPLE

A 23.5 L steel gas cylinder having a large (40 mm) neck was equipped with a fluid flow control unit having a liquid filling aperture and tube, a customer valve and a safety relief valve. A Mylar™ bag was connected to the liquid filling tube and provided inside the cylinder. The resultant cylinder and internals were similar to the type described in US 3,645,291.

The system was pre-cooled with LIN before filling. After pre-cooling, 4 L of LIN was poured through the central tube of a coaxial nozzle into the fill tube and the bag. The customer valve was open when the LIN was poured in, and then both the customer valve and the liquid filling aperture closed after the LIN had been poured in. The pressure and temperature of the cylinder were then logged over time.

The experiment was then repeated using a 23.5 L steel gas cylinder of the type depicted in Figure 1. The inner vessel 22 was made from catalytically set silicone. The inner vessel 22 was rolled up and inserted into the cylinder through the neck. After insertion, the inner vessel 22 resumed its original shape unaided. The inner vessel 22 rested on some packing material to prevent contact with the cylinder wall and base.

It should be noted that more LIN (4 litres total) had to be charged to the cylinder having an internal bag to achieve an equivalent final pressure as achieved with the cylinder having an internal can which only required 2.5 litres total. The Inventors observed that there was a significantly greater loss of LIN due to blow back using the cylinder having an internal bag rather than using the cylinder having an internal can.

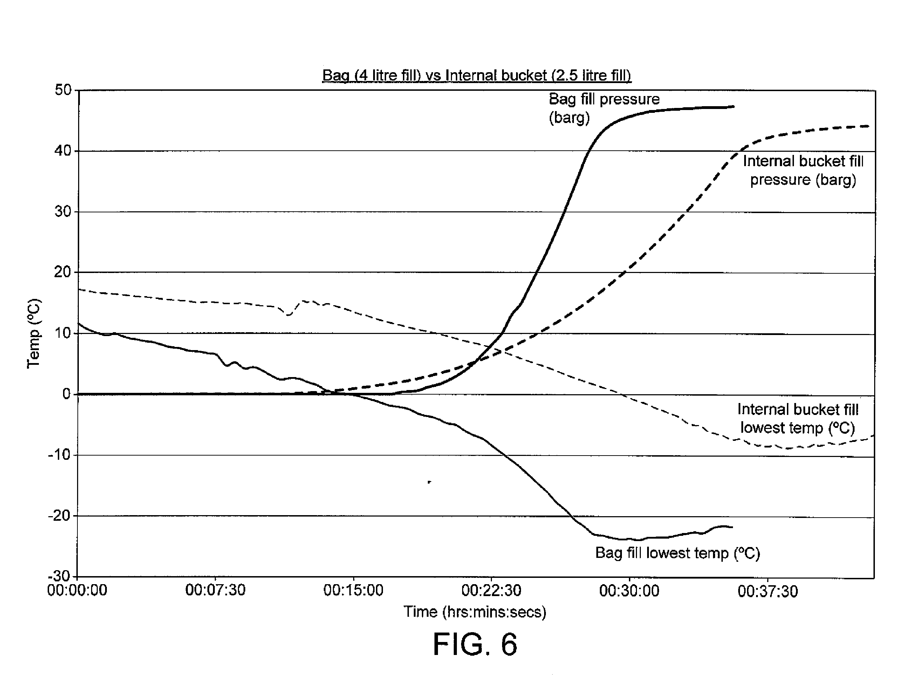

The graph in Figure 6 depicts how the pressure and temperature of both cylinders varied over time as the LIN evaporates.

The graph for the cylinder having the internal bag indicates that LIN begins to boil quite slowly which is due to there being little heat transfer. However, as boiling proceeds, pressure increases, and this causes an increase in heat transfer, that being the usual case with an increase in pressure in a gas. The increase in pressure causes an increase in boiling rate and, thus, a feedback effect works, giving rise to an accelerating rise in pressure. Substantially all of the LIN has boiled after about 28 mins.

In contrast, the graph for the cylinder having the internal can indicates that, as with the internal bag, LIN begins to boil quite slowly but then, whilst boiling does accelerates, the rate of acceleration is significantly less than for the internal bag. Substantially all of the LIN has boiled after about 37 mins.

These results are also reflected in the temperature curves. However, there is an added advantage in that lowest temperature reached by the cylinder having an internal can (about -9°C) was significantly higher than the lowest temperature reached by the cylinder having an internal bag (about -24°C). This result indicates that the present invention may improve safety and may be applied to gas storage containers made from materials that are less resistant to cryogenic temperatures than steel and aluminium.

Advantages of preferred gas containers according to the present invention include:

- the containers may be filled more rapidly than conventional containers filled by feeding gas into the containers from a compressor, or by pressurising cryogenic liquid, vaporising the pressurised liquid, and pumping the pressurised gas into the containers;
- the containers may also be filled in a more energy efficient manner than such conventional containers;
- the containers may be filled more reliably and with less wastage of cryogenic fluid than conventional containers designed to be charged with liquid cryogen;
- the outer vessels of the containers do not reach cryogenic temperatures and, thus, materials such as steel which are less resistant to cryogenic temperatures may be used to form the outer vessels;
- the capital and operating costs for the containers, and the process for their manufacture, is less than for conventional containers designed to be charged with liquid cryogen;
- the process for manufacturing of the containers is simpler than for such conventional containers;
- gas storage containers may be filled at the customer site using a standard liquid cryogen delivery vehicle and a low pressure pump; and
- increased robustness of an internal can as compared to an internal bag.

It will be appreciated that the invention is not restricted to the details described above with reference to the preferred embodiments but that numerous modifications and variations can be made without departing form the spirit or scope of the invention as defined in the following claims.

## Claims

1. A gas storage container for storing and/or dispensing gas under pressure, said container comprising:

   an outer vessel defining an interior space for holding gas under pressure, said outer vessel comprising an opening for receiving a fluid flow control unit;
   a fluid flow control unit mounted within said opening for controlling fluid flow into and out of the outer vessel; and
   at least one inner vessel provided within said interior space, said inner vessel(s) defining a part of said interior space for holding cryogenic fluid in spaced relationship with respect to said outer vessel and being in fluid flow communication with a remaining part of said interior space, the or each inner vessel having a mouth for receiving cryogenic fluid from said fluid flow control unit,

   wherein said mouth of the or each inner vessel is open to the remaining part of said interior space.

2. A container as claimed in Claim 1, wherein said mouth of the or each inner vessel is in spaced relationship with respect to said fluid flow control unit.

3. A container as claimed in Claim 1 or Claim 2, wherein said interior space has a top half and a bottom half, the or each inner vessel being provided entirely within the bottom half of said interior space.

4. A container as claimed in any of the preceding claims, comprising a conduit arrangement provided within said interior space for feeding cryogenic fluid from said fluid flow control unit to the or each inner vessel.

5. A container as claimed in any of the preceding claims, wherein said mouth of the or each inner vessel has a diameter that is greater than that of said opening.

6. A container as claimed in any of the preceding claims, wherein the or at least one of said inner vessels is in the form of a can having an open end and comprising at least one support for supporting said can in said spaced relationship with respect to said outer vessel.

7. A container as claimed in Claim 10, wherein said open end of said can is in the form of an inverted cone.

**8.** A process for manufacturing a gas storage container as defined in Claim 1, wherein said container is a gas cylinder, said process comprising:

forging an open-ended cylinder having a closed base end, a circular enclosing wall and an open end;
inserting the or each inner vessel into said open-ended cylinder through said open end;
enclosing said open-ended cylinder by forging a shoulder and a neck from said circular enclosing wall at said open end, to form an outer vessel defining an interior space for holding gas under pressure;
forming an opening through said neck to said interior space suitable for receiving a fluid flow control unit; and
mounting a fluid flow control unit within said opening.

**9.** A process for filling a gas storage container as defined in Claim 1 with gas under pressure, said process comprising:

charging said inner vessel(s) with cryogenic fluid comprising liquefied gas through said fluid flow control unit; and
closing said container to the passage of gas into and out of the container, and allowing said fluid to become gaseous within said container.

**10.** A process as claimed in Claim 9, wherein said inner vessel is in the form of a can having an open end in the form of an inverted cone and comprising at least one support for supporting said can in said spaced relationship with respect to said outer vessel, said process comprising tilting said container to increase the surface area of said cryogenic fluid in said inner vessel.

**11.** A process for manufacturing a gas storage container as defined in any of Claims 1 to 7, said process comprising:

providing an outer vessel defining an interior space for holding gas under pressure, said outer vessel comprising an opening for receiving a fluid flow control unit;
inserting the or each inner vessel into said interior space of said outer vessel through said opening, said inner vessel(s) defining a part of said interior space for holding cryogenic fluid in spaced relationship with respect to said outer vessel and being in fluid flow communication with a remaining part of said interior space, the or each inner vessel having a mouth for receiving cryogenic fluid from said fluid flow control unit; and

mounting a fluid flow control unit within said opening,

wherein said mouth of the or each inner vessel is open to the remaining part of said interior space.

**12.** A process as claimed in Claim 11, wherein the or each inner vessel is deformable, said process comprising deforming said inner vessel(s) prior to inserting said inner vessel(s) into said interior space of said outer vessel in a deformed state.

**13.** A process as claimed in Claim 12, wherein the or each inner vessel is resilient and resumes its original shape unaided inside the container.

**14.** A process for manufacturing a gas storage container as defined in any of Claims 1 to 7, said process comprising:

inserting at least one inner vessel into a base section of an outer vessel;
assembling said outer vessel from said base section and at least one further section to form said outer vessel defining an interior space for holding gas under pressure, and comprising an opening for receiving a fluid flow control unit; and
mounting a fluid flow control unit within said opening.

**15.** A process as claimed in Claim 14, wherein said sections are bonded to each other by friction welding.

FIG. 1

# FIG. 2

FIG. 3

FIG. 4

FIG. 5

Bag (4 litre fill) vs Internal bucket (2.5 litre fill)

FIG. 6

EP 2 466 187 A1

Europäisches
Patentamt

European
Patent Office

Office européen
des brevets

# EUROPEAN SEARCH REPORT

**Application Number**

EP 10 19 5503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 414 359 A (PAUL HEYLANDT) 2 May 1922 (1922-05-02) * the whole document * | 1-15 | INV. F17C5/02 |
| X | US 3 645 291 A (FINNEY PETER E) 29 February 1972 (1972-02-29) * the whole document * | 1 | |
| X | DE 100 24 460 A1 (MESSER GRIESHEIM GMBH [DE]) 6 December 2001 (2001-12-06) * paragraphs [0002], [0009], [0010], [0011] * | 1 | |
| A | DE 10 2004 014010 A1 (AIR LIQUIDE DEUTSCHLAND GMBH [DE]) 13 October 2005 (2005-10-13) * paragraphs [0004], [0 10] - [0012] * | 1-15 | |
| A | US 2007/193647 A1 (KLEBE ULRICH [DE] ET AL) 23 August 2007 (2007-08-23) * paragraph [0054] * | 1-15 | |

| | | | TECHNICAL FIELDS SEARCHED (IPC) |
|---|---|---|---|
| | | | F17C |

The present search report has been drawn up for all claims

| Place of search | Date of completion of the search | Examiner |
|---|---|---|
| Munich | 15 April 2011 | Ott, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 19 5503

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2011

| Patent document cited in search report | | Publication date | Patent family member(s) | | Publication date |
|---|---|---|---|---|---|
| US 1414359 | A | 02-05-1922 | NONE | | |
| US 3645291 | A | 29-02-1972 | BE | 741560 A | 16-04-1970 |
| | | | CH | 516118 A | 30-11-1971 |
| | | | GB | 1266147 A | 08-03-1972 |
| | | | NL | 6916971 A | 13-05-1971 |
| DE 10024460 | A1 | 06-12-2001 | NONE | | |
| DE 102004014010 | A1 | 13-10-2005 | NONE | | |
| US 2007193647 | A1 | 23-08-2007 | AT | 431522 T | 15-05-2009 |
| | | | CN | 101008467 A | 01-08-2007 |
| | | | EP | 1813853 A1 | 01-08-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1414359 A
- US 3645291 A
- GB 2277370 A
- EP 10195491 A
- EP 10195461 A